# EUROPEAN PATENT APPLICATION

(11) **EP 1 763 220 A1**
(43) Date of publication of application: **14.03.2007**
(21) Application number: 05405522.3
(22) Date of filing: 07.09.2005
(51) Int. Cl.: H04N 3/15

(54) **Solid-state charge sensor with high sensitivity and improved dynamic range**

(71) Applicant: CSEM Centre Suisse d'Electronique et de Microtechnique SA, 2007 Neuchâtel (CH)
(72) Inventor: Kaufmann, Rolf, 8046 Zürich (CH); Lehmann, Michael, 5035 Unterentfelden (CH); Seitz, Peter, 8902 Urdorf (CH)
(74) Representative: Schneider Feldmann AG Patent- und Markenanwälte

(57) **Abstract**

A solid-state charge sensor with high dynamic range and low readout noise comprises a semiconductor area (S) where charge is created and stored, an output gate (PG), a low-capacitance sense diffusion (sense), an overflow gate (OFG) and a high-capacitance overflow-charge-handling structure (OCH) that has either linear or non-linear charge-voltage response. The sense diffusion is employed for the high-sensitivity detection of low charge signals; the charge-handling structure (OCH) is used when larger charge signals are present, and the voltage on the overflow gate (OFG) defines the crossover point from small to large charge signals. A preferred application of the charge sensor is in photosensing of radiation. Photocharges can be generated and stored either in photodiodes or under photogates (PG), allowing the use of correlated double sampling techniques for the effective suppression of reset noise.

## Description

### FIELD OF THE INVENTION

The present invention relates to solid-state charge sensing. In particular, it relates to a solid-state charge sensor and a method for sensing charges by means of a solid-state charge sensor, according to the preambles of the independent claims. Its advantages are a high sensitivity and an improved dynamic range. Its preferred application is in solid-state photosensing of incident radiation.

### BACKGROUND OF THE INVENTION

Electronic charge sensors usually combine the tasks of generating and detecting charge. This is a consequence of using a sense node of the charge sensor also as an accumulation node. If the sense node has a large capacitance, many generated charge carriers can be handled. But the smallest detectable signal and thus the dynamic range is limited by the overall system noise. On the other hand, it is possible to reduce the sense-node capacitance to achieve a high sensitivity. This will allow detecting small signals, but on the other hand the pixel will saturate soon. Both approaches have about the same dynamic range.

Several approaches are known in the literature to improve the dynamic range of electronic charge sensors, in particular of image sensors. The most important ones are briefly described in the following.

One approach is to use two or more different integration times. The two or more grabbed images are then merged in a post-processing step on the digital side into one image with high dynamic range. Almost any image sensor can be used for this method. However, it requires a relatively high computational time for post-processing the grabbed images.

U.S. Patent No. 6,011,251 (B. Dierickx et al, "Method for obtaining a high dynamic range read-out signal of a CMOS-based pixel structure and such CMOS-based pixel structure") teaches the acquisition and storage of complete images at different integration times directly in the pixel. The sensing element is reset and starts to integrate. After a first time interval, the actual signal is stored in a memory element while the sensing element still integrates the incoming light signal. After a second time interval, integration is stopped and both values are read out. Merging them can reproduce images with improved dynamic range.

EP-1'003'329 A1 (P. Seitz et al. "Method and device for forming an image") describes a particular implementation of an image sensor that uses the above principle but obviates the need for the storage of complete intermediate images, while it reduces temporal and spatial aliasing.

Higher dynamic-range figures can be obtained with pixel structures exhibiting non-linear responses. An example are image sensors with logarithmic response such as HDRC-sensors from IMS Stuttgart (www.hdrc.com), Germany, or Fuga-sensors from Fillfactory, Belgium; cf. "Pixel Structure with Logarithmic Response for Intelligent and Flexible Imager Architectures" by Dierickx, N. Ricquier, Microelectronic Engineering, Vol. 19, No. 1-4, Sep. 1992

U.S. Patent No. 5,164,832 (J. Halvis et al., "Clipped dynamic range compression image sensing apparatus") describes another non-linear approach for dynamic-range extension, based on CCD technology. It results in a photosensitivity response that is bi-linear, with a large linear slope for small photosignals and a small linear slope for large photosignals.

U.S. Patent No. 6,815,685 (M. Wäny, "Photodetector and method for detecting radiation) teaches the use of a diode-connected field-effect transistor as a non-linear compression element in parallel to the reset transistor of a standard APS (active pixel sensor) device. The resulting photo-response is linear for small photosignals and logarithmic for large photosignals, and the transition point is selectable with an external voltage. In this way, an image sensor with an effective dynamic range exceeding six orders of magnitude can be realized. The same patent also describes how a single diode-connected field-effect transistor can simultaneously be used as the non-linear compression element and as the reset transistor.

U.S. Publication No. 2003/0071196 A1 (P. Seitz, "Photodetector with high dynamic range and increased operating temperature") describes a simplified pixel structure that makes use of just one diode element in a standard APS device to obtain linear-logarithmic photo-response without requiring any additional transistors.

WO-03/032394 A1 (M. Wäny, "Optoelectronic Sensor") describes a photosensor in which the photosensitive device is separated from the non-linear compression device by means of an electric switch. If the switch is open, the photosensor shows a linear photo-response, up to a saturation threshold; if the switch is closed, the photosensor shows linear-logarithmic response.

The disadvantage of these known photosensors with high dynamic range is that they all suffer from reset noise (also called kTC noise) because it is not possible to employ true correlated sampling techniques for the effective cancellation of this reset noise. This results in noisy images at low light levels and in a dynamic range that does not reach the highest possible value.

### SUMMARY OF THE INVENTION

It is an object of the invention to provide a solid-state charge sensor and a method for charge sensing that do not suffer from the drawbacks described above. In particular, the charge sensor and the method shall have a high sensitivity and, at the same time, an improved dynamic range. It is a further object of the invention to provide a photosensor with high dynamic range and excellent low-light performance, through the use of a pixel structure that allows the use of correlated sampling techniques for the effective cancellation of reset noise.

These and other objects are solved by the solid-state charge sensor and the charge-sensing method defined in the independent claims. Preferred embodiments of the invention are given in the dependent claims.

The idea behind the so-called "overflow pixel" is to use a small-sized sense node to reach a high sensitivity. Before the charge sensor begins to saturate, the additional charges are not thrown away but are rather collected in an additional storage tank.

The solid-state charge sensor according to the invention comprises a first charge-storage element for storing charges, and readout means for reading out the charges stored in the first charge-storage element. It further comprises a second charge-storage element for storing charges arriving from the first charge-storage element. Charge-transfer means are provided for transferring charges from the first charge-storage element to the second charge-storage element when the amount of charges stored in the first charge-storage element has reached a predetermined saturation level. Readout means are provided for reading out the charges stored in the second charge-storage element.

A preferred embodiment of the solid-state charge sensor according to the invention comprises a semiconductor area where charge is separated and stored, an output gate, a low-capacitance sense diffusion, an overflow gate and an overflow-charge-handling structure that has either linear or non-linear charge-voltage response. The sense diffusion is employed for the high-sensitivity detection of low charge signals; the charge-handling structure is added when larger charge signals are present, and the voltage on the overflow gate defines the transition point from small to large charge signals.

A preferred application of the charge sensor and the charge-sensing method according to the invention is in photosensing of radiation to which the semiconductor is sensitive. Photocharge can be generated and stored either in photodiodes or under photogates, allowing the use of correlated double-sampling techniques for the effective suppression of reset noise. However, the invention is not only useful for pixels in image sensors integrating the charges generated by incident light, but for all charge circuits that have to detect and process charge packets. Additional circuits are also described herein.

The pixel according to the invention, for use in a solid-state image detector, comprises photo-sensitive means for converting incident radiation into charges, and charge-sensing means for sensing charges converted in the photo-sensitive means. The charge-sensing means comprise a solid-state charge sensor according to the invention. The image sensor according to the invention comprises a plurality of pixels arranged in a one- or two-dimensional array, which are pixels according to the invention.

The method according to the invention, for sensing charges by means of a solid-state charge sensor, comprises the steps of storing charges to be sensed in a first charge-storage element of the solid-state charge sensor, and reading out the charges stored in the first charge-storage element. Charges are transferred from the first charge-storage element to a second charge-storage element of the solid-state charge sensor when the amount of charges stored in the first charge-storage element has reached a predetermined saturation level. The charges stored in the second charge-storage element are read out.

### BRIEF DESCRIPTION OF THE DRAWINGS

Embodiments of the invention are described in greater detail hereinafter relative to the attached schematic drawings.
- Figure 1: shows a basic structure of the charge sensor according to the invention in a cross-section.
- Figure 2: shows (a) a first embodiment of the charge sensor according to the invention in a cross section, and (b) its equivalent circuit diagram.

- Figure 3: shows (a) a timing diagram for the charge sensor of Fig. 2, and (b) the corresponding timing descriptions.
- Figures 4 and 5: show a second and a third embodiment of the charge sensor according to the invention in cross sections.
- Figure 6: shows a photodetector array with direct decision circuit.
- Figure 7: shows a circuit diagram of a fourth embodiment of the charge sensor according to the invention.
- Figure 8: shows (a) a fifth embodiment of the charge sensor according to the invention in a cross section, and (b) its equivalent circuit diagram.
- Figure 9: shows circuit diagrams of two implementations of the charge sensor according to the invention in a standard charge amplifier.
- Figures 10-12: show a sixth, seventh and eighth embodiment, respectively, of the charge sensor according to the invention in cross sections.

### DESCRIPTION OF PREFERRED EMBODIMENTS

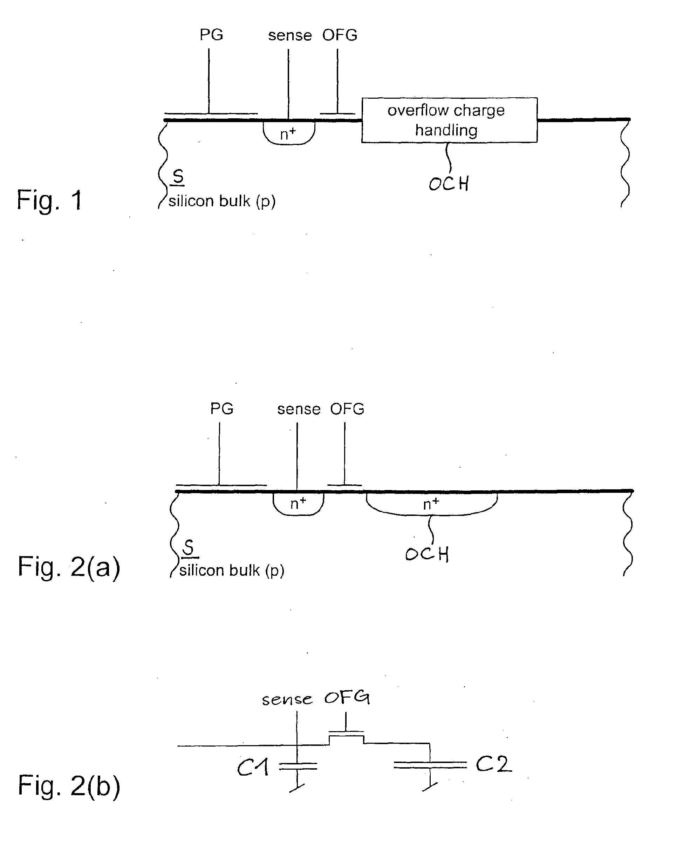

The principle of the invention is schematically shown in **Figure 1**. The solid-state charge sensor is fabricated on a semiconductor substrate S, e.g., a p-type silicon bulk substrate. Charges are generated or separated in the substrate S below one or several photogates PG, e.g., by incident light (not shown). The charges are integrated, collected or stored on a separate photogate or on a sense node sense, e.g., an n⁺ implant. In the former case, the charges still have to be transferred to the sense node, whereas in the latter case no charge transfer is necessary. An additional storage tank OCH for overflow-charge handling is provided. Various embodiments of such additional storage tanks OCH are discussed below. The read-out is divided into two phases: in a first phase the sense node sense only is read out, whereas in a second phase all of the collected charges are read out. With a simple threshold one can decide whether the first or the second data should be used.

### A. Double-linear response

**Figure 2** shows a first embodiment of the overflow-charge-handling structure OCH, which is adapted for collecting negative charges. The overflow-charge-handling structure OCH consists of an additional n⁺ implant, which is much larger than the sense-node implant sense. This ensures that the overflow capacitance C2 is also much larger than the sense-node capacitance C1 (cf. Fig. 2(b)). The sense node sense can be reset to a given reset potential. After collecting the charges, the sense node holds the result and can be read out by a read-out structure (not shown), e.g., a buffer. A transistor OFG placed between the two implants sense, OCH acts as an overflow gate. This transistor OFG can either be switched on, so that both capacitances C1, C2 are connected together, or its gate can be set to an intermediate level, and thus provides an adjustable barrier between the two capacitances C1, C2. The n-channel transistor OFG can either be an enhancement transistor or a depletion transistor.

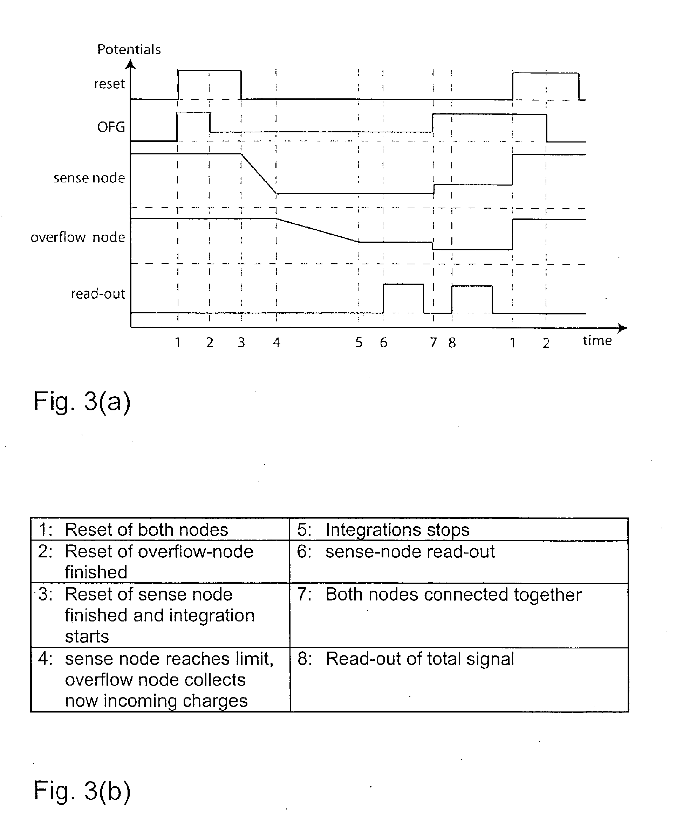

The corresponding timing is shown in **Figure 3**. Before collecting charges, both implants sense, OCH are reset to a high potential by closing the overflow gate (transistor) OFG. After performing the reset, the photogenerated electrons are collected on the sense node sense, hence its potential is falling. As long as it is higher than the gate potential on the overflow gate OFG minus the threshold voltage, the overflow implant OCH is completely decoupled from the sense node sense. When the potential on the sense node sense reaches this limit, the transistor OFG begins to conduct and additional charge flows over to the overflow implant OCH.

Readout is done in two steps: first, the value on the sense node sense is read out, then the overflow gate OFG connects both implants sense, OCH and the value is read out again. A post-processing stage (not shown) has to detect whether the first value has reached the saturation level. If this happened, the second value has to be used for further processing.

The embodiment of Figs. 2 and 3 results in a double-linear response curve (output voltage vs. illumination intensity). The small capacitance of the sense node sense has a response curve with a steep slope, whereas the large overflow capacitance C2 produces a rather flat response slope for high light intensities.

In the following, variations of the first embodiment are described, all having a double-linear response.

### Double readout:

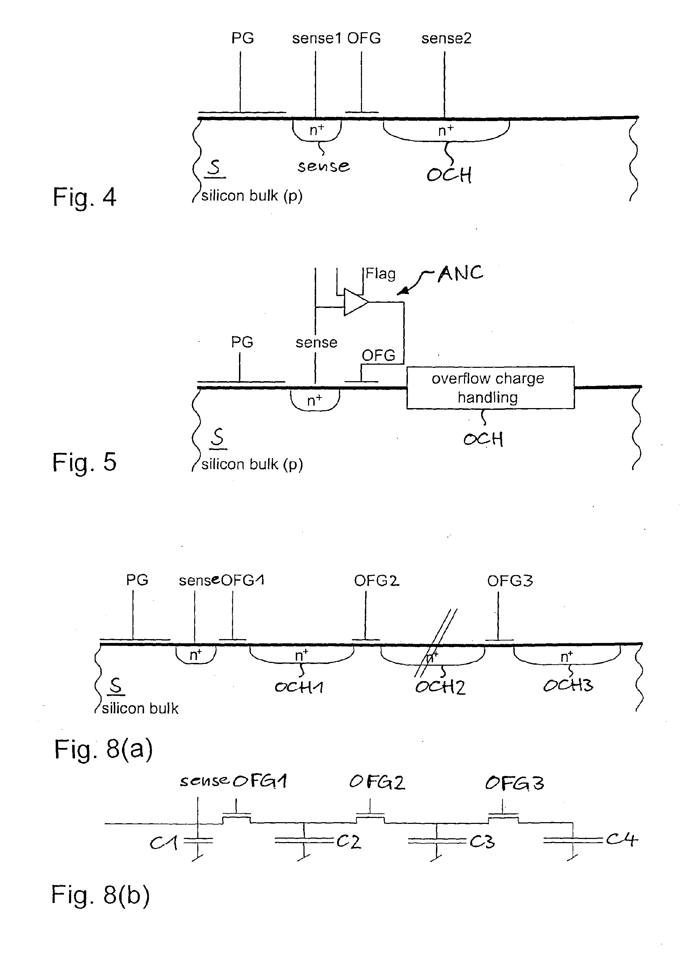

Instead of reading out the two nodes sense, OCH sequentially, they can be read out in parallel with a second output sense2 improving the speed. This option is illustrated in **Figure 4**.

### Direct decision:

The decision to use either the high-sensitive value or the low-sensitive value can be made by an analogue circuit ANC just after the overflow structure OCH, as shown in **Figure 5**. Here only one analogue signal and a flag signaling which value is used have to be transmitted. This method is especially suited for improving the dynamic range of an image sensor. For array operation the voltage on the overflow gate OFG can either be controlled globally or row by row. Row-by-row control has the advantage that less data have to be stored until the decision which value to use can be made. Area operation and double readout can be combined so that the decision can be made directly when the pixel is read out. The decision can be made either per pixel or per line; see

### Figure 6.

### Bipolar operation:

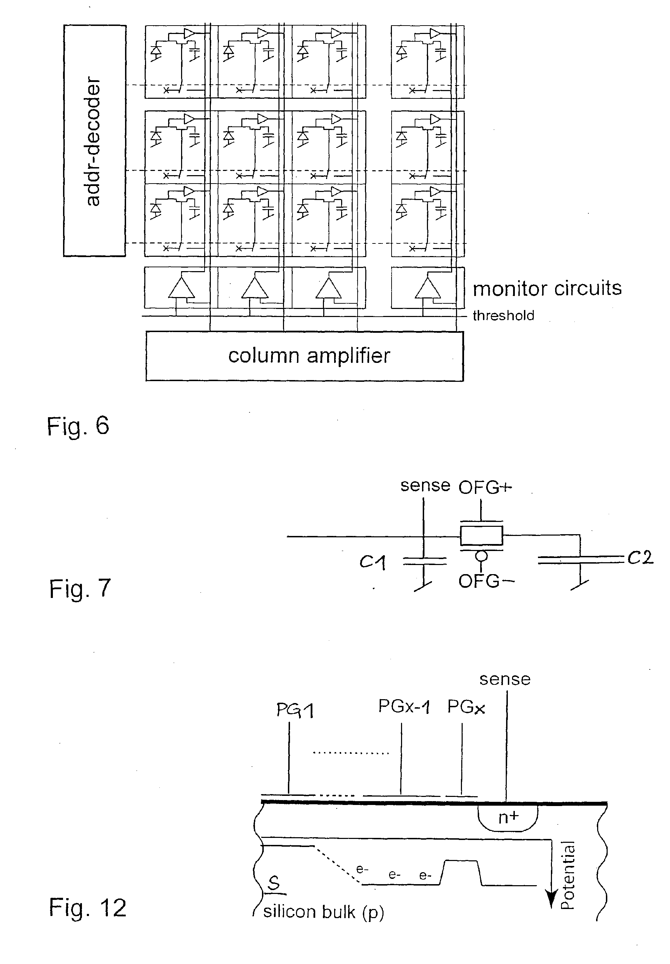

The circuit described with reference to Figure 2 can only handle charge packets which decrease the potential on the sense nodes sense, OCH. By adding a second transistor OFG- with the opposite polarity in parallel to the overflow gate OFG+, as shown in **Figure 7,** the circuit detects signals of both signs.

### Stacking:

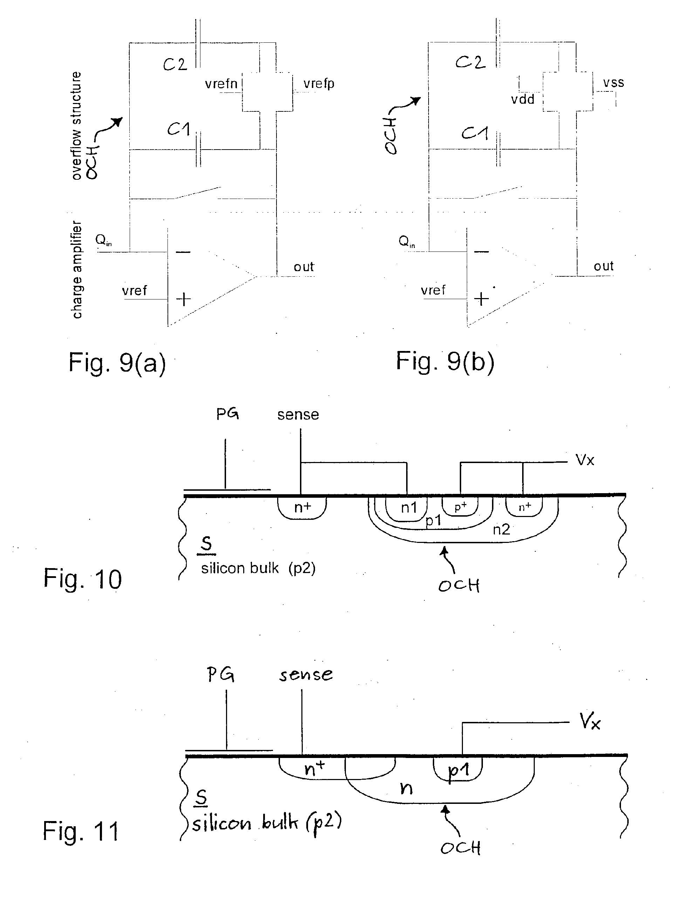

To further improve the dynamic range, several stages can be connected together, as shown in **Figure 8.** As soon as the first overflow node OCH1 is full, a second overflow node OCH2 will be filled up. When the second becomes full, the additional charge will flow to the third, and so on. To read out the signal, the first overflow node OCH1 will be read out, then the first overflow node OCH1 and second overflow node OCH2 will be connected together by the first overflow gate OFG1 and read out, then the second overflow gate OFG2 is opened to connect the third overflow node OCH3 to the preceding ones, and so on.

### Common charge-sensing applications:

The method according to the invention can also be used in other sampling charge amplifiers where a high dynamic range has to be processed. **Figure 9** shows two possible implementations in a standard charge-amplifier topology.

### B. Linear-logarithmic response

**Figure 10** shows another embodiment of the overflow-charge-handling structure OCH. The configuration shown in Figure 10 is suitable for dealing with negative charges. By exchanging all n- and p-implantations, the structure can be used for positive charge carriers.

The basic operation is similar to that of the first embodiment of Fig. 2. The photogenerated charges are collected on a sense-node implantation sense. But in this embodiment the overflow gate and the overflow-charge-handling structure OCH consist of an n1-p1-n2-p2 implantation configuration, where the implant n1 is connected to the sense node sense, the implants p1 and n2 are held at a fixed potential Vx and the implant p2 is formed by the p-type bulk silicon of the substrate S. The charges will start to fill up the capacitance of the reversely biased diodes formed by implants n1 and p1 (which has previously been reset to a high potential). When the potential on n1 reaches Vx minus the built-in voltage of the diode, a small current will flow from p1 to n1, which will partly compensate the charges flowing to n1 from the sense node. Due to the exponential I-V characteristic of a diode, this embodiment of the overflow charge handling structure shows a logarithmic response with respect to the number of incoming charges. Therefore, the combination of the overflow gate and the described n1-p1-n2-p2 implantation configuration will have a linear-logarithmic response curve, linear when only the sense node is filled with charges, logarithmic when the charges drift into the n1-p1-n2-p2 structure.

### Variation of the embodiment of Fig. 10:

The n1-p1-n2-p2 structure itself can be designed simpler, as shown in **Figure 11.** The n1-p1-n2-p2 structure is replaced by one single n-p diode. This structure has the same functionality as the first one. However, due to the larger size of the junction, it has more capacitance, more leakage current and is also more sensitive to stray light.

### C. Last photogate as the logarithmic element

When the photogate PG does not consist of one single gate structure, but is separated in several gates PG1, ... , PGx, then the last photogate PGx can be used as a logarithmic element. With an appropriate potential configuration the photogenerated charges are collected below the second last gate PGx-1, as shown in Figure 12. Since the second last photogate PGx-1 and the last photogate PGx are used only for charge-signal processing and not for the generation or accumulation of photocharges, these two gates PGx-1, PGx have to be shielded from light.

By choosing the potential of the last gate PGx such that a weak inversion layer forms in the bulk beneath it, the photogate PGx takes on a similar function as an MOS transistor in subthreshold mode. Depending on whether a buried channel is present below the gates, this transistor is an enhancement-mode MOS transistor or a depletion-mode transistor. It is well known from the literature that both transistors exhibit an exponential current/voltage characteristic in the subthreshold mode. Therefore, the photogate PGx acts like a logarithmic overflow structure: as long as the potential below the photogate PGx-1 is significantly higher (many tens of mV at room temperature) than the potential below the photogate PGx, a linear photo-response is obtained. If the potentials below the photogates PGx-1 and PGx are comparable (within a few 10 mV at room temperature), then the photo-response will be logarithmic. The overall photo-response will be linear-logarithmic, as obtained by the prior art; however, due to the possibility to employ double-correlated sampling techniques for effective reset-noise cancellation, the low-light noise behavior of the photosensor according to the invention will be much improved, and the dynamic range will be even higher than obtained with the prior art.

After integration, the potential of the out gate PGx is decreased and the actual level under the int gate PGx-1 is frozen. Read-out can be done conventionally by shifting the charge from the int-gate to the sense node sense.

This invention is not limited to the preferred embodiments described above, to which variations and improvements may be made, without departing from the scope of protection of the present patent.

### LIST OF REFERENCE SIGNS

- ANC: Analog circuit
- OCH: Overflow-charge-handling structure
- OFG: Overflow gate
- PG: Photogate
- S: Substrate
- sense: Sense node

## Claims

1. A solid-state charge sensor comprising
a first charge-storage element (sense) for storing charges, and
readout means for reading out the charges stored in the first charge-storage element (sense),
**characterized by**
a second charge-storage element (OCH) for storing charges arriving from the first charge-storage element (sense), charge-transfer means (OFG) for transferring charges from the first charge-storage element (sense) to the second charge-storage element (OCH) when the amount of charges stored in the first charge-storage element (sense) has reached a predetermined saturation level, and
readout means for reading out the charges stored in the second charge-storage element (OCH).

2. The solid-state charge sensor according to claim 1, wherein the charge-transfer means (OFG) comprise adjustment means for electronically adjusting said predetermined saturation level.

3. The solid-state charge sensor according to claim 2, wherein the charge-transfer means comprise a first transistor (OFG, OFG+), and preferably further comprise a second transistor (OFG-) with a polarity opposite to that of the first transistor (OFG+).

4. The solid-state charge sensor according to any of the preceding claims, wherein the capacitance (Cl) of the first charge-storage element (sense) is smaller than the capacitance (C2) of the second charge-storage element (OCH).

5. The solid-state charge sensor according to any of the preceding claims, wherein the first charge-storage element (sense) is a photogate or an implant in a semiconductor substrate (S).

6. The solid-state charge sensor according to any of the preceding claims, wherein the second charge-storage element (OCH) is an implant in a semiconductor substrate (S).

7. The solid-state charge sensor according to any of the preceding claims, wherein the second charge-storage element (OCH) comprises a diode structure (n1-p1-n2-p2; n-p2).

8. The solid-state charge sensor according to any of the preceding claims, wherein the readout means for reading out the charges stored in the first charge-storage element (sense) are the same as the readout means for reading out the charges stored in the second charge-storage element (OCH).

9. The solid-state charge sensor according to any of the preceding claims, comprising
a plurality of charge-storage elements (sense, OCH1, OCH2, ...) connected in series such that any of the charge-storage elements (sense, OCH1, OCH2, ...) is adapted for storing charges arriving from the previous charge-storage element,
charge-transfer means (OFG1, OFG2, ...) for transferring charges from any one of the charge-storage elements (sense, OCH1, OCH2, ...) to the next charge-storage element when the amount of charges stored in the previous charge-storage element has reached a predetermined saturation level, and
readout means for reading out the charges stored in the charge-storage elements (sense, OCH1, OCH2, ...).

10. A pixel for use in a solid-state image detector, comprising
photo-sensitive means for converting incident radiation into charges, and
charge-sensing means for sensing charges converted in the photo-sensitive means,
**characterized in that**
the charge-sensing means comprise a solid-state charge sensor according to any of the preceding claims.

11. An image sensor comprising a plurality of pixels arranged in a one- or two-dimensional array,
**characterized in that**
the pixels are pixels according to claim 10.

12. A method for sensing charges by means of a solid-state charge sensor, comprising the steps of
storing charges to be sensed in a first charge-storage element (sense) of the solid-state charge sensor, and
reading out the charges stored in the first charge-storage element (sense),
**characterized in that**
charges are transferred from the first charge-storage element (sense) to a second charge-storage element (OCH) of the solid-state charge sensor when the amount of charges stored in the first charge-storage element (sense) has reached a predetermined saturation level, and the charges stored in the second charge-storage element (OCH) are read out.

13. The method according to claim 12, wherein said predetermined saturation level is adjusted prior to the charge-transfer step.

14. The method according to claim 12 or 13, wherein a first amount of charges is stored in the first charge-storage element (sense) and a second, larger amount of charges is stored in the second charge-storage element (OCH).

15. The method according to any of claims 12-14, wherein the charges stored in the first charge-storage element (sense) and the charges stored in the second charge-storage element (OCH) are read out sequentially after each other, preferably by first reading out the charges stored in the first charge-storage element (sense), and then connecting the first charge-storage element (sense) with the second charge-storage element (OCH) and reading out the remaining charges.

16. The method according to any of claims 12-14, wherein the charges stored in the first charge-storage element (sense) and the charges stored in the second charge-storage element (OCH) are read out in parallel.

17. The method according to any of claims 12-16, wherein after reading out the charges stored in the first charge-storage element (sense), it is detected whether the amount of these charges has reached the predetermined saturation level, and if so, only the charges stored in the second charge-storage element (OCH) or the sum of the charges stored in the first charge-storage element (sense) and the second charge-storage element (OCH) are used as an output signal.

18. The method according to any of claims 12-16, wherein
charges are transferred from one charge-storage element to the next charge-storage element of a plurality of charge-storage elements (sense, OCH1, OCH2, ...) when the amount of charges stored in said one charge-storage element has reached a predetermined saturation level, and the charges stored in said one charge-storage element and in said next charge-storage element are read out.
